# EUROPEAN PATENT APPLICATION

(11) **EP 3 627 007 A1**
(43) Date of publication of application: **25.03.2020**
(21) Application number: 19198656.1
(22) Date of filing: 20.09.2019
(51) Int. Cl.: F16J 15/06, F16B 19/00, F16H 57/029

(54) **SEAL MEMBER AND FIXING MEMBER FOR THE SAME**

(30) Priority: 21.09.2018 JP 2018177707; 10.09.2019 JP 2019164729
(71) Applicant: Nabtesco Corporation, Tokyo (JP)
(72) Inventor: AKAO, Masaki, Tokyo (JP)
(74) Representative: Grünecker Patent- und Rechtsanwälte PartG mbB

(57) **Abstract**

A seal member 400 includes a seal base portion 410 that has a retaining portion 430 provided at a position corresponding to a recess 120 formed in an end surface 311 of a gear device 100. The seal base portion 410 contacts the end surface 311 of the gear device 100 to seal a housing space 313 in the gear device 100. The seal member 400 further includes a fixing member 500 that fixes the retaining portion 430 to the device in the recess 120.

## Description

### TECHNICAL FIELD

The present disclosure relates to a seal member and a fixing member for fixing the seal member to a device.

### BACKGROUND

In recent years, various types of gear devices have been used in a broad range of technical fields such as industrial robots and machine tools.

Patent Literature 1 describes a seal member that is disposed between a rotor (device) and a rotated member and seals a housing space for the rotor from the outside. The seal member includes a seal base portion that has an inner peripheral edge located closer to the rotor than the contour of the housing space and transmits a rotational force from the end surface of the rotor to the rotated member, and a seal annular portion that has a rigidity lower than that of the seal base portion.

### RELEVANT REFERENCES

### LIST OF RELEVANT PATENT LITERATURE

Patent Literature 1: Japanese Patent Application Publication No. 2017-219134

### SUMMARY

The seal member described in Patent Literature 1 has a pawl that is inserted into the housing space in order to fix the seal member to the device. However, when the amount of irreversible deformation of the pawl is small, the seal member may be displaced from an initially-intended installation position. Thus, it is desired to suppress such displacement of the seal member more reliably.

One object of the present invention is to provide a seal member whose displacement is more reliably suppressed. Other objects of the invention will be made apparent through description in the entire specification.

According to one aspect of the invention, a seal member includes a seal base portion that has a retaining portion provided at a position corresponding to a recess formed in an end surface of a device. The seal base portion contacts the end surface of the device to seal a housing space in the device. The seal member further includes a fixing member that fixes the retaining portion to the device in the recess.

In the seal member, the retaining portion and the seal base portion may be provided separately from each other.

In the seal member, the device may be a gear device.

In the seal member, the retaining portion may be a pawl extending from the seal base portion.

In the seal member, the fixing member may be a pressing member that presses the retaining portion against the recess.

In the seal member, the pressing member may be a pin.

In the seal member, the pressing member may be elastically deformable in a radial direction of the recess and press the retaining portion against a side wall of the recess.

In the seal member, the pressing member may be a spring pin.

In the seal member, the retaining portion may extend along a side wall of the recess.

According to another aspect of the invention, provided is a fixing member for the seal base portion. The seal base portion has a retaining portion provided at a position corresponding to a recess formed in an end surface of a device. The seal base portion contacts the end surface of the device and sealing a housing space in the device. The fixing member fixes the retaining portion to the device in the recess.

According to the aspects of the invention, it is possible to provide a seal member whose displacement is prevented.

### BRIEF DESCRIPTION OF THE DRAWINGS

Fig. 1 is a schematic sectional view of a gear device (rotor) 100.
Fig. 2 is a schematic front view of a carrier 300.
Fig. 3 is a schematic rear view of a seal member 400 according to one embodiment of the invention.
Fig. 4 is an enlarged view of a retaining portion 430 of the seal member 400 according to one embodiment of the invention.
Fig. 5 is a schematic sectional view showing a fixing member 500 according to one embodiment of the invention and attachment of the seal member 400 to the gear device 100 using the fixing member 500.
Fig. 6 is a schematic view of the fixing member 500 according to one embodiment of the invention.

### DESCRIPTION OF THE EMBODIMENTS

Embodiments of the invention will now be described with reference to the appended drawings. The seal member according to one embodiment of the invention is fixed to an end surface of various devices such as a gear device and a speed reducer. Hereinafter, an embodiment in which a seal member is fixed to a gear device will be described as an example. However, the invention is applicable to various devices in addition to the gear device.

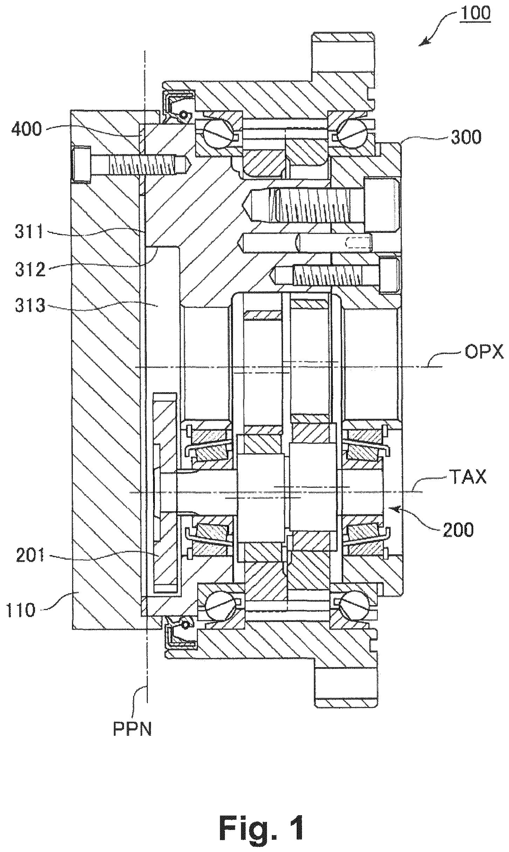

Fig. 1 is a schematic sectional view of a gear device 100, which is a rotor. The gear device 100 will now be described with reference to Fig. 1.

Fig. 1 shows a gear device 100 and a mating member (rotated member) 110. The gear device 100 is coupled to the mating member 110. The gear device 100 is, for example, a speed reducer. The gear device 100 may output a rotational force about an output axis OPX to the mating member 110 to rotate the mating member 110. When the mating member 110 is fixed, the gear device 100 itself may be rotated by the rotational force output by the gear device 100.

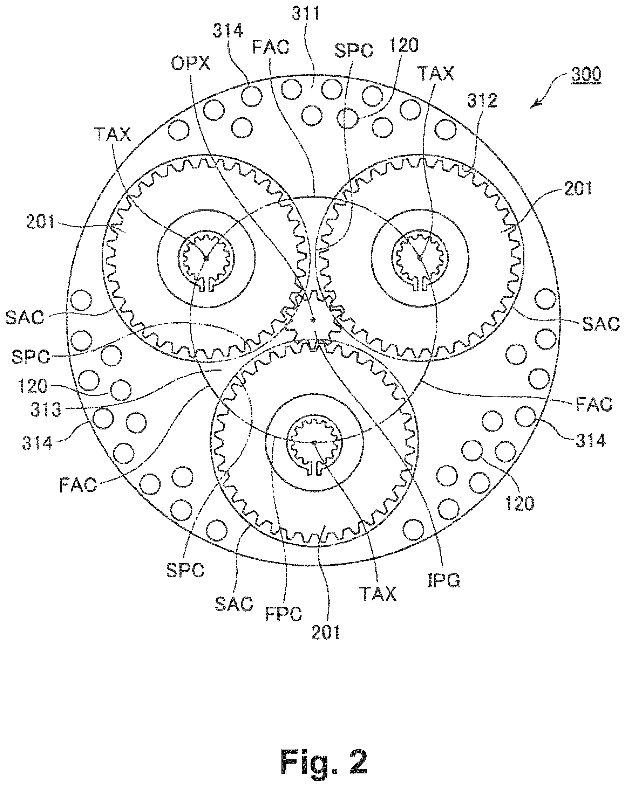

The illustrated gear device 100 includes three transmission gears 201 (see Fig. 2) provided in a crankshaft assembly 200, a carrier 300, and a seal member 400. Fig. 1 shows one of the three transmission gears 201. Each of the three transmission gears 201 rotates about a transmission axis TAX parallel to the output axis OPX.

The carrier 300 has an end surface 311 and an inner edge surface 312. The end surface 311 is a surface along a virtual plane PPN orthogonal to the output axis OPX and is also an end surface of the gear device 100. The seal member 400 is sandwiched between the end surface 311 and the mating member 110. In Fig. 1, the virtual plane PPN is drawn at the boundary between the end surface 311 and the seal member 400.

A housing space 313 in which the three transmission gears 201 are accommodated is formed in the carrier 300. The housing space 313 is an area recessed from the end surface 311. The inner edge surface 312 defines a profile of the housing space 313 on the end surface 311. The three transmission gears 201 mesh with a common input gear (not shown) in the housing space 313. The housing space 313 is provided with lubricant for lubricating the three transmission gears 201 and the input gear. The seal member 400 serves to prevent leakage of the lubricant to the outside.

Fig. 2 is a schematic front view of the carrier 300. The carrier 300 will be hereinafter described with reference to Fig. 2.

As shown in Fig. 2, the housing space 313 is surrounded by three first arcuate base contours FAC and three second arcuate contours SAC. That is, the inner edge surface 312 of the carrier 300 has the three first arcuate base contours FAC and the three second arcuate contours SAC. Each of the first arcuate base contours FAC is a circular arc along a part of the first virtual circle FPC centered on the output axis OPX. The three transmission gears 201 are arranged in the housing space 313. The three transmission gears 201 rotate about the corresponding three transmission axes TAX in a corresponding circular area surrounded by the three second virtual circles SPC respectively.

The rotation axis of an input gear IPG coincides with the output axis OPX. The input gear IPG is configured to mesh with the three transmission gears 201. When the input gear IPG rotates about the output axis OPX, the three transmission gears 201 rotate about the three transmission axes TAX, respectively. A recess 314 is provided in the end surface 311 of the carrier 300. In the illustrated embodiment, a plurality of recesses 314 are provided on the end surface 311. The number of the recesses 314 is not particularly limited and can be adjusted as appropriate. Each of the plurality of recesses 314 is formed at a position corresponding to a through hole 413 of the seal member 400, which will be described later. Further, the end surface 311 of the carrier 300 has a recess 120 provided at a position corresponding to a retaining portion 430 of the seal member 400 which will be described later. In the illustrated embodiment, three recesses 120 are formed in the end surface 311. However the number of recesses 120 may be changed as appropriate depending on the number of the retaining portions 430.

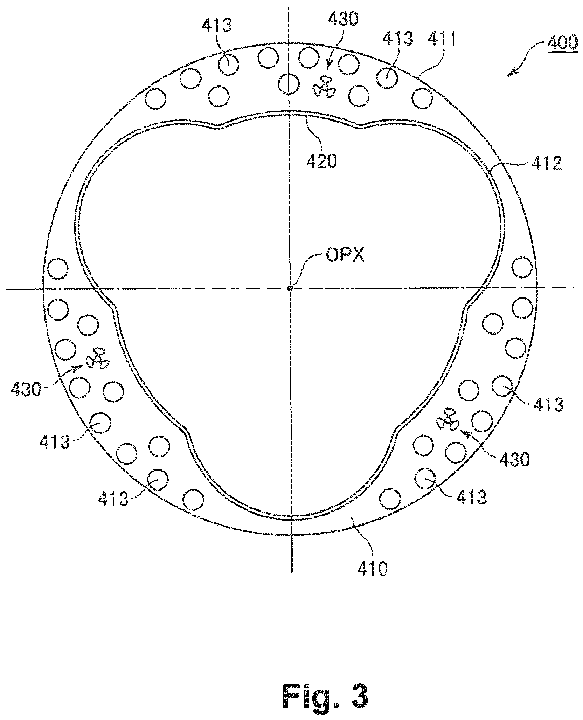

Fig. 3 is a schematic rear view of the seal member 400 according to one embodiment of the invention. The seal member 400 will be hereinafter described with reference to Fig. 3.

The seal member 400 in one embodiment is configured to include a seal base portion 410, a seal annular portion 420, and a fixing member 500. The seal base portion 410 contacts the end surface 311 of the gear device 100 and seals the housing space 313 for the gear device 100. The seal base portion 410 has the retaining portions 430 provided at a position corresponding to the recesses 120 provided on the end surface 311 of the gear device 100. In the illustrated embodiment, the seal base portion 410 has the three retaining portions 430.

The seal base portion 410 of the seal member 400 according to the embodiment includes an inner peripheral edge 412 surrounded by an outer peripheral edge 411 of the seal base portion 410. A profile of the inner peripheral edge 412 of the seal base portion 410, that is, a profile of an outer edge of a region surrounded by the inner peripheral edge 412 may be determined so as to substantially correspond to the profile of the housing space 313 (see Fig. 2) formed in the carrier 300. That is, the inner peripheral edge 412 is formed so as to surround the housing space 313 of the carrier 300 when viewed from the direction along the output axis OPX. The region surrounded by the inner peripheral edge 412 is not limited to a specific shape. The profile of the region surrounded by the inner peripheral edge 412 illustrated is merely an example.

As shown in Fig. 3, a plurality of through holes 413 are formed in the seal base portion 410. The seal member 400 according to the embodiment of the invention is fixed to the carrier 300 of the gear device 100 by the fixing member 500. However it is not excluded that a fastener (not shown, for example, a bolt) may be further inserted in the through hole 413 of the seal base portion 410.

As shown in Fig. 3, the seal annular portion 420 is disposed along the inner peripheral edge 412 and forms a closed loop. The seal annular portion 420 has a lower rigidity than the seal base portion 410. For example, the seal annular portion 420 may be formed of rubber. Alternatively, the seal annular portion 420 may be formed of any other material capable of exhibiting a sealing performance sufficient to prevent leakage of the lubricant in the housing space 313 (see Fig. 1) in the carrier 300. The embodiment of the invention is not limited to a specific material used for the seal annular portion 420. Any material may be appropriately selected for the seal annular portion 420.

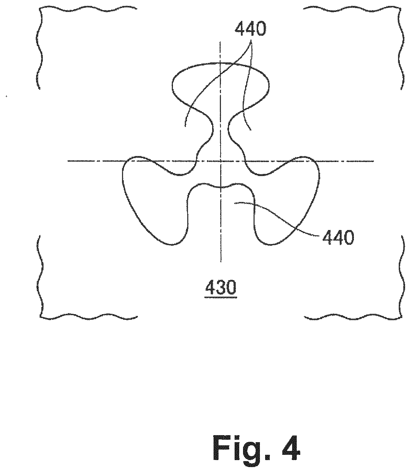

Fig. 4 is an enlarged view of the retaining portion 430 of the seal member 400 according to the embodiment of the invention shown in Fig. 3. The retaining portion 430 will be hereinafter described with reference to Fig. 4.

As shown in Fig. 4, the retaining portion 430 of the seal member 400 according to the embodiment includes three pawls 440 extending from the seal base portion 410. Each of the pawls 440 is formed such that it protrudes inside a through hole formed in the seal base portion 410. The retaining portion 430 serves as an alignment mark when the seal member is attached to the gear device 100. In the illustrated example, the retaining portion 430 is configured to have the three pawls 440. However, the number, shape, structure, and material of the pawls 440 can be adequately changed and they are not limited to this embodiment. In the illustrated embodiment, the seal base portion 410 and the retaining portion 430 (in other words, the three pawls 440) are integrally formed. Alternatively the seal base portion 410 and the retaining portion 430 may be separately formed.

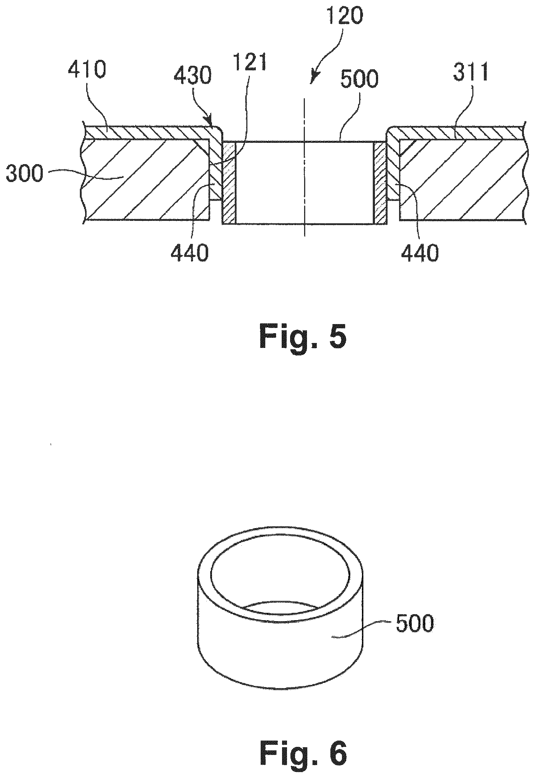

With reference to Fig. 5, the fixing member 500 will be described. Moreover, how to attach the seal member 400 to the gear device 100 by using the fixing member 500 will be also described.

The fixing member 500 fixes the retaining portion 430 to the carrier 300 of the gear device 100 in the recess 120 formed in the end surface 311 of the carrier 300. When the seal member 400 is attached to the carrier 300 of the gear device 100, the fixing member 500 is inserted into the recess 120 from the seal member 400 side while the retaining portion 430 of the seal member 400 and the recess 120 in the carrier 300 overlap each other as viewed from the direction along the output axis OPX. Thus, the retaining portion 430 (in other words, the three pawls 440) is pressed and bent by the fixing member 500 and deformed to be laid on the side wall 121 of the recess 120. The retaining portion 430 (in other words, the three pawls 440) is disposed and fixed between the carrier 300 and the fixing member 500 in the recess 120. As described above, since the retaining portion 430 is fixed by the fixing member 500 in the recess 120, it is possible to more reliably suppress displacement of the seal member 400.

The fixing member 500 according to the embodiment is a pressing member that fixes the retaining portion 430 to the recess 120 such that the retaining portion 430 is pressed against the recess 120 by the fixing member 500. In this manner, it is possible to attach the seal member 400 to the gear device 100 accurately and firmly, prevent the seal member from being displaced, and improve the embeddedness of the seal member into the device.

The fixing member 500 in one embodiment may be a pressing member that is elastically deformable in the radial direction of the recess 120 and fixes the retaining portion 430 to the recess 120 such that the retaining portion 430 is pressed against the side wall 121 of the recess 120.

Fig. 6 illustrates an example of the fixing member 500. As illustrated, the fixing member 500 according to one embodiment of the invention is a cylindrical member, such as a pin or a spring pin. The fixing member 500 according to the embodiment is not limited to these but may have various shapes, structures and dimensions and may be formed of various materials with which the fixing member is appropriately configured as a pressing member.

The exemplary embodiments of the present invention have been described above. The above embodiments are not limited to the configurations described above and can be applied to various types of devices including gear devices and reducers.

### LIST OF REFERENCE NUMBERS

- 100: gear device
- 110: mating member
- 120: recess (attachment hole)
- 200: crankshaft assembly
- 201: transmission gear
- 300: carrier
- 311: end surface
- 312: inner edge surface
- 313: housing space
- 400: seal member
- 410: seal base portion
- 412: inner peripheral edge
- 420: seal annular portion
- 430: retaining portion
- 440: pawl
- 500: fixing member
- FAC: first arcuate contour
- FPC: first virtual circle
- OPX: output axis
- PPN: virtual plane
- SPC: second arcuate contour
- SPC: second virtual circle
- TAX: transmission axis

## Claims

1. A seal member (400), comprising:
a seal base portion (410) having a retaining portion (430) provided at a position corresponding to a recess (120) formed in an end surface (311) of a device (100), the seal base portion (410) contacting the end surface (311) of the device (100) and sealing a housing space (313) in the device (100); and
a fixing member (500) fixing the retaining portion (430) to the device (100) in the recess (120).

2. The seal member (400) of claim 1, wherein the retaining portion (430) and the seal base portion (410) are provided separately from each other.

3. The seal member (400) of claim 1 or 2, wherein the device (100) is a gear device.

4. The seal member (400) of any one of claims 1 to 3, wherein the retaining portion (430) is a pawl extending from the seal base portion (410).

5. The seal member (400) of any one of claims 1 to 4, wherein the fixing member (500) is a pressing member pressing the retaining portion (430) against the recess (120).

6. The seal member (400) of claim 5, wherein the pressing member is a pin.

7. The seal member (400) of claim 5, wherein the pressing member is elastically deformable in a radial direction of the recess and presses the retaining portion (430) against a side wall (121) of the recess (120).

8. The seal member (400) of claim 7, wherein the pressing member is a spring pin.

9. The seal member (400) of any one of claims 1 to 8, wherein the retaining portion (430) extends along a side wall (121) of the recess (120).

10. A fixing member (500) for a seal base portion (410) that has a retaining portion (430) provided at a position corresponding to a recess (120) formed in an end surface (311) of a device (100), the seal base portion (410) contacting the end surface (311) of the device (100) and sealing a housing space (313) in the device (100), wherein
the fixing member (500) fixes the retaining portion (430) to the device (100) in the recess (120).
